# EUROPEAN PATENT SPECIFICATION

(11) **EP 3 082 417 B1**
(45) Date of publication and mention of the grant of the patent: **14.08.2019**
(21) Application number: 13899765.5
(22) Date of filing: 19.12.2013
(51) Int. Cl.: A01N 25/30, A01N 25/02, A01N 25/04, A01N 51/00

(54) **ADDITIVE PACKAGE COMPOSITIONS FOR PESTICIDE SUSPENSION CONCENTRATE FORMULATIONS**
ADDITIVVERPACKUNGSZUSAMMENSETZUNGEN FÜR KONZENTRATFORMULIERUNGEN EINER PESTIZIDSUSPENSION
COMPOSITIONS DE PRÉFORMULATION D'ADDITIFS POUR DES FORMULATIONS DE CONCENTRÉ DE SUSPENSIONS PESTICIDES

(43) Date of publication of application: 26.10.2016
(73) Proprietor: Dow Global Technologies LLC, Midland, MI 48674 (US)
(72) Inventor: LU, Wei, Shanghai 200136 (CN); REN, Hua, Shanghai 201300 (CN); MU, Jianhai, Shanghai 201206 (CN); YUN, Dong, Shanghai 200129 (CN); JI, Jing, Shanghai 200433 (CN); WANG, Xiaohua, Shanghai 200000 (CN); ZHONG, Ling, Shanghai 201204 (CN)
(74) Representative: Beck Greener LLP
(86) International application number: PCT/CN2013/089957
(87) International publication number: WO 2015/089787

(56) References cited:
- WO-A1-2011/030806
- WO-A1-2012/005371
- CN-A- 1 839 695
- CN-A- 101 692 807
- CN-A- 101 946 775
- CN-A- 102 239 830
- CN-A- 102 511 475

## Description

### FIELD OF THE INVENTION

The invention relates to compositions that comprise a wetting agent, a polycarboxylate type surfactant, and a sulfonate type surfactant. This composition can be used as an additive package composition in pesticide suspension concentration formulations to enhance thermal stability.

### BACKGROUND OF THE INVENTION

This invention relates to a composition that can be employed as an additive package in a pesticide suspension concentration formulation. With the addition of this additive package composition, the resultant pesticide suspension concentration shows improved thermal stability over an extensive period of time.

Water-based pesticide suspension concentration formulations generally need to be stored for a long period of time, before being used in agricultural applications, such as diluting the concentration with large amount of water before spraying onto crops. During the long storage period, however, the dispersed active ingredient pesticide compounds (such as an insecticide or a fungicide chemical) in the pesticide suspension concentration tend to undergo aggregation or crystallization with each other. Specifically, the dispersed active ingredient pesticide particles would suffer from Ostwald Ripening, when they are being stored. The smaller size of particle would disappear and the bigger size of particle would grow into larger particles. This continuously growing and coarsening of the pesticide particles would eventually cause the pesticide suspension concentration to show "pasting" or "caking," thereby causing the pesticide suspension concentration difficult to handle when it is ready to be used.

There have been a number of efforts in the prior art to overcome the storage instability problem described above. Such efforts, however, tend to exhibit various limitations and were generally limited to modifying the dispersant additives in the pesticide suspension concentration. For instance, WO2012005371 discloses a water-based pesticide suspension preparation method including adding polycarboxylate and sulfonate surfactants. However, the pesticide suspension concentration disclosed in WO2012005371 requires the concentration of the active ingredient pesticide compound to be extremely high, which limits its applications.

CN 101692807 discloses a dispersible oil suspension agent containing cyproconazole and a wetting agent, a dispersant, an emulsifying agent, a thickening agent, a stabilizing agent, an anti-freezing agent, a defoaming agent and a non-aqueous dispersing media.

Accordingly, it would be a significant advance in the art to provide a water-based pesticide suspension concentration formulation that is simple and exhibits improved thermal stability when stored for an extensive period of time.

### SUMMARY OF INVENTION

The present invention provides additive package compositions, the additive package compositions comprising: (1) a wetting agent; (2) a polycarboxylate type surfactant; and (3) a sulfonate type surfactant.

The wetting agent comprises a combination of a polyoxyethylene ether and an ethylene oxide-propylene oxide copolymer.

Preferably, the additive package compositions as described above, such that the combination of a polyoxyethylene ether and an ethylene oxide-propylene oxide copolymer contains substantially equal amounts of the polyoxyethylene ether and the ethylene oxide-propylene oxide copolymer.

Preferably, the additive package compositions as described above, such that the ethylene oxide-propylene oxide copolymer contains 50 weight percent to 85 weight percent of polymerized ethylene oxide units, with the remainder being polymerized propylene oxide units.

The polycarboxylate type surfactant is a hydrophobic modified comb-like polymer.

The sulfonate type surfactant is lignosulfonate.

The polycarboxylate type surfactant is from 0.1 to 20 weight percent based on a total dry weight of the additive package and a weight ratio of the polycarboxylate type surfactant to the sulfonate type surfactant is from 1:0.01 to 1:40

In another aspect of the present invention, a pesticide suspension concentration comprising an additive package composition as described above and an agricultural chemical compound.

Preferably, a pesticidal suspension concentration as described above, such that the agricultural chemical compound is imidacloprid.

### DETAILED DESCRIPTION

As noted above, the invention provides a composition comprising a wetting agent, a first dispersant, and a second dispersant. This composition can be employed as an additive package composition in a pesticide suspension concentrate formulation. Advantageously, as demonstrated by the Examples below, the pesticide suspension concentrate formulations that contain the additive package compositions of the present invention show improved storage stability (i.e., without pasting, caking, or creaming) after being stored above room temperature for an extensive period of time.

The wetting agent component of the additive package composition in accordance to one embodiment of the present invention comprises a combination of an anionic surface-active compound, such as a polyoxyethylene ether phosphate, and an ethylene oxide/propylene oxide copolymer. In one embodiment of the present invention, in the wetting agent component, the wt.% of the polyoxyethylene ether phosphate is substantially the same as the wt.% of the ethylene oxide/propylene oxide copolymer, based on the total dry weight of the pesticide suspension concentration formulation.

The suitable polyoxyethylene ether phosphates that can be used to form the wetting agent in accordance with some embodiments of the present invention are obtained by addition of ethylene oxide onto alcohols, particularly fatty alcohols, alkyl phenols, fatty amines, carboxylic acid amides, and anionic wetting agents, such as alkali metal, amine and alkylolamine salts of fatty acids, alkylsulfuric acids, alkylsulfonic acids and alkyl benzenesulfonic acids. Some examples of such polyoxythelene ethers are Triton XQS-20 (polyoxyethylene ether phosphate, Dow Chemical Company)

The suitable ethylene oxide/propylene oxide copolymers that can be used to form the wetting agent in accordance to some embodiments of the invention are low molecular weight copolymers that are water soluble. They generally have molecular weights of up to 12,000, preferably below 10,000, more preferably below 8,000, and down to 2,000. There is no particular limitation on the weight ratios of the ethylene oxide and the propylene oxide copolymers. In some embodiments, the weight ratio of the ethylene oxide copolymer to the propylene oxide copolymer is in the range of 1:99 to 99:1, alternatively 20:80 to 80:20, alternatively 40:60 to 60:40, or alternatively 50:50. The ratio of ethylene oxide to propylene oxide in the copolymer is such that it is water soluble. As a general rule, the copolymer will have from 50 weight percent to 85 weight percent of polymerized ethylene oxide units, with the remainder being polymerized propylene oxide units.

The ethylene oxide/propylene oxide copolymers mentioned above are generally linear. The two polymers are employed in an aqueous solution. The polymers are used in proportions or amounts up to the limit of solubility or compatibility of the two polymers. Total solution concentrations of up to 4 or 5 weight percent have been found acceptable. At higher concentrations, compatibility problems may appear. Preferred total solution concentrations are from 0.5 to 4 weight percent.

In addition to the wetting agent described above, the additive package composition in accordance with the present invention comprises a first dispersant. The first dispersant is a polycarboxylate type surfactant and specifically, a hydrophobic modified comb-like polymer such as, polyacrylic acid, polymethacrylic acid, polymaleic acid, polymaleic anhydride, a copolymer of maleic acid or maleic anhydride with an olefin (such as isobutylene or diisobutylene), a copolymer of acrylic acid and itaconic acid, a copolymer of methacrylic acid and itaconic acid, a copolymer of maleic acid or maleic anhydride with styrene, a copolymer of acrylic acid and methacrylic acid, a copolymer of acrylic acid and methyl acrylate, a copolymer of acrylic acid and vinyl acetate, a copolymer of maleic acid or maleic anhydride with acrylic acid, an N-methyl-fatty acid (e.g. C₈₋₁₈) sarcosinate, a carboxylic acid such as a resin acid or a fatty acid (e.g. C₈₋₁₈), or a salt of such a carboxylic acid. Such a salt may, for example, be an alkali metal (such as sodium or potassium), an alkaline earth metal (such as calcium or magnesium), ammonium or various amines (such as an alkylamine, a cycloalkylamine and an alkanolamine). Further, a commercially available polycarboxylate such as Geropon T/36 (sodium salt of maleic acid/olefin copolymer, tradename of Rhodia), Duramax D-305 (sodium salt of maleic acid/olefin copolymer, Dow Chemical Company) may be used.

The content of the polycarboxylate type surfactant in the additive package of the present invention may be optionally changed depending upon the amount of the active ingredient pesticide compound to be added. However, it is from 0.1 wt.% or more, preferably 0.5 wt.% or more and at the same time 20 wt.% or less, preferably 10 wt.% or less, with wt.% based on the total dry weight of the additive package. The weight ratio in content of the active ingredient pesticide compound to the polycarboxylate type surfactant is usually from 1:0.001 to 1:10, preferably from 1:0.005 to 1:2.

In addition to the wetting agents and the first dispersants described above, the additive package composition in accordance with the present invention further comprises a second dispersant. The second dispersant of the composition of the invention is a sulfonate type surfactant, which is a lignosulfonate.

The lignosulfonate may, for example, be calcium lignosulfonate, sodium lignosulfonate, potassium lignosulfonate, magnesium lignosulfonate or ammonium lignosulfonate. Such lignosulfonates are commercially available as New Kargen WG-4 (sodium lignosulfonate, manufactured by TAKEMOTO OIL & FAT Co., LTD.), New Kargen RX-B (sodium lignosulfonate, manufactured by TAKEMOTO OIL & FAT Co., LTD.), SANX P-252 (sodium lignosulfonate, manufactured by NIPPON PAPER CHEMICALS Co., LTD.), SANX C (calcium lignosulfonate, manufactured by NIPPON PAPER CHEMICALS Co., LTD.), SANX P201 (calcium lignosulfonate, manufactured by NIPPON PAPER CHEMICALS Co., LTD.), VANILLEX N (partially desulfonated sodium lignosulfonate, manufactured by NIPPON PAPER CHEMICALS Co., LTD.), or PEARLLEX NP (high molecular weight sodium lignosulfonate, manufactured by NIPPON PAPER CHEMICALS Co., LTD.).

The amount of the sulfonate type surfactant to be included in the additive package composition in accordance with some embodiments of the present invention may suitably be changed depending upon the amount of the active ingredient pesticide compound to be added. In some embodiments of the present invention, the amount of the sulfonate type surfactant ranges from 0.1 wt.% or more, preferably from 0.5 wt.% or more and at the same time 30 wt. % or less, preferably 20 wt. % or less, with wt% based on the total dry weight of the pesticide suspension concentrate composition. The weight ratio in content of the active ingredient pesticide compound to the sulfonate type surfactant is usually from 1:0.001 to 1:20, preferably from 1:0.005 to 1:4. The weight ratio in content of the polycarboxylate type surfactant described above to the sulfonate type surfactant is from 1:0.01 to 1:40.

In addition to the additive package composition that is being employed in the pesticide suspension concentrate formulations of the present invention, water is employed as an additional dispersant material. In some embodiments, water may be incorporated into the additive package composition or into the final pesticide suspension concentrate formulation. The content of the water in the pesticide suspension concentrate formulation of the present invention is usually from 9.8 wt.% or more, preferably 20 wt.% or more, and at the same time 99.7 wt. % or less, and preferably 98.8 wt.% or less, with wt.% based on the dry weight of the pesticide suspension concentrate composition.

In addition to the additive package compositions described above, as other optional components, other additives such as an antifreezing agent, a thickener, an antifoaming agent, an antiseptic agent, a pH modifier, a stabilizer, etc. may suitably be added, as the case requires, to further enhance the properties of the pesticide suspension concentrate formulation of the present invention.

Preferred antifreezing agents to be used in accordance to some embodiments of the present invention include a dihydric alcohol which is effective also as a viscosity lowering agent. Preferably, the dihydric alcohol is an alkylene glycol such as ethylene glycol or propylene glycol, and it is particularly preferred to use propylene glycol. The amount of the antifreezing agent to be used in the suspension of the present invention is usually from 2 to 30 wt. %, preferably from 5 to 10 wt. %, dry weight of the pesticide suspension concentrate composition.

Preferred thickener can be used in accordance to some embodiments of the present invention include, for example, be a natural polysaccharide such as xanthan gum, rhamsan gum, locust bean gum, carrageenan or welan gum; a synthetic polymer such as sodium polyacrylate; a semisynthetic polysaccharide such as carboxy methyl cellulose; a mineral fine powder such as aluminum magnesium silicate, smectite, bentonite, hectorite or fumed silica, or alumina sol. The amount of the thickener to be used in the suspension of the present invention is usually from 0.01 wt.% or more, preferably 0.05 wt.% or more, and at the same time 5.0 wt.% or less, and preferably 1.0 wt. % or less, with wt.% based on dry weight of the pesticide suspension concentrate composition.

Preferred antiseptic agents can be used in accordance to some embodiments of the present invention include, for example, Proxel GXL (tradename, Zeneca AG). The amount of the antiseptic to be used in the suspension of the present invention is usually from 0.01 wt.% or more, preferably 0.05 wt.% or more, and at the same time 1.0 wt.% or less, and preferably 0.2 wt.% or less, with wt.% based on the dry weight of the pesticide suspension concentration formulation.

Preferred antifoaming agents can be added for the purpose of suppressing formation of bubbles during the formation of the pesticide suspension concentrate formulations in accordance to some embodiments of the present invention. Such antifoaming agents can be, for example, a silicone type antifoaming agent containing polydimethylsiloxane. For example, Rhodorsil Antifoam 416 (trade-name, Rhodia Nicca Ltd.), Rhodorsil Antifoam 481 (trade-name, Rhodia Nicca Ltd.), Rhodorsil Antifoam 432 trade-name, Rhodia Nicca Ltd.), KM 72 (trade-name, Shin-Etsu Chemical Co., Ltd.), KM 75 (trade-name, Shin-Etsu Chemical Co., Ltd.), or Anti-mousse (trade-name, BELCHIM CROP PROTECTION) may be used. Generally, a silicone type antifoaming agent containing silica is preferred. The amount of the antifoaming agent to be used in the suspension of the present invention is usually from 0.01 wt.% or more, preferably 0.5 wt.% or more and at the same time 10 wt. % ore less, preferably from 1.0 wt. % or less, based on the dry weight of the pesticide suspension concentrate composition.

As the active ingredient pesticide compound that can be used in some embodiments of the presentation include a wide range of agricultural chemicals such as insecticides or fungicides. The amount of the active ingredient pesticide compound to be included in the pesticide suspension concentrate formulation varies depending on the application and the desired result. Generally, in the case of foliar treatment, the concentration of the active ingredient pesticide compound is usually from 1 to 50,000 ppm; in the case of water surface application, the concentration of the active ingredient pesticide compound is usually from 50 to 50,000 ppm; and in the case of soil treatment, the concentration of the active ingredient pesticide compound is usually from 1 to 1,000 ppm.

Some typical insecticidal compounds that can serve as active ingredient pesticide compounds include abamectin, fenobucarb, isoprocarb, chlorfluazuron, chlorpyrifos, fipronil, clothianidin, spinetoram, spinosad, dinotefuran, methoxyfenozide, ethofenprox, ethiprole, acephate, benfuracarb, monocrotophos, silafluofen, imidacloprid, acetamiprid, thiamethoxam, chlorantraniliprole, cyantraniliprole, bensultap, cyhalothrin, cypermethrin, permethrin, deltamethrin, bifenthrin, lambda-cyhalothrin, thiacloprid, nitenpyram, buprofezin, pymetrozine, profenofos, chromafenozide, tebufenozide, thiocyclam, cartap, lepimectin, emamectin benzoate, pirimicarb, indoxacarb, carbofuran, carbosulfan, flufenoxuron, pyriproxyfen, flubendiamide, spirotetramat, novaluron, thiosultap-disodium, metaflumizone, 3-bromo-N-(2-bromo-4-chloro-6-(1-cyclopropylethylcarbamoyl)phenyl)-1-(3-c-hloropyridin-2-yl)-1H-pyrazol-5-carboxamide, 3-bromo-N-(4-chloro-2-(1-cyclopropylethylcarbamoyl)-6-methylphenyl)-1-(3--chloropyridin-2-yl)-1H-pyrazol-5-carboxamide, 3-bromo-N-(2-bromo-4-chloro-6-(cyclopropylmethylcarbamoyl)phenyl)-1-(3-ch-loropyridin-2-yl)-1H-pyrazol-5-carboxamide, 3-bromo-N-(4-chloro-2-methyl-6-(methylcarbamoyl)phenyl)-1-(3-chloropyridi-n-2-yl)-1H-pyrazol-5-carboxamide and 3-bromo-1-(3-chloropyridin-2-yl)-N-(4-cyano-2-methyl-6-(methylcarbamoyl)p-henyl)-1H-pyrazol-5-carboxamide, validamycin, oryzastrobin, tricyclazole, isotianil, tiadinil, probenazole, flutolanil, pencycuron, isoprothiolane, thifluzamide, azoxystrobin, metominostrobin, ferimzone, fthalide, mepronil, diclomezine, pyroquilon and furametpyr may be mentioned.

Some typical fungical compounds that can serve as active ingredient pesticide compounds include oryzastrobin, tricyclazole, isotianil, tiadinil, probenazole, flutolanil, pencycuron, furametpyr and validamycin.

The pesticide suspension concentrate formulations of the present invention can be produced by a usual method for producing a water-based pesticidal suspension. For example, after mixing components manually in a glass beaker, mechanical grinding is carried out to make active ingredient pesticide compound particles fine. For example, wet grinding, bead milling, or sand milling may can be carried out by using commercially available grinding devices such as GERISI SMJ-2-180. As a result, the final pesticide suspension concentrate formation slurry particles are preferably fine, and the average particle size (by volume) of the active ingredient pesticidal compound ranges from 0.5 to 10 um, more preferably from 1 to 3 um. The average particle size can be measured by a particle size analyzer such as Microtrac HRA (manufactured by NIKKISO Co., Ltd.).

The following examples are illustrative of the invention but are not intended to limit its scope. Unless otherwise indicated, the ratios, percentages, parts, and the like used herein are by weight.

### EXAMPLES

The following examples illustrate the advantages of the present invention. Unless otherwise stated, all conditions are standard pressure and room temperature.

Table 1 below is a comprehensive list of all the raw materials used for preparation of samples in accordance with one embodiment of the present invention, and comparative samples. Table 1 below includes the chemicals used to prepare one embodiment of the pesticide suspension concentrate in accordance to the present invention. Table 1 also shows the function for each material, and the commercial supplier from which these materials could be obtained.

**Table 1 - Comprehensive List of All Raw Materials Used to Make the Emulsion Copolymer in Example 1**

| **Raw material** | **Function** | **Supplier** |
|---|---|---|
| Imidacloprid Pesticide (at 95% concentration) | Pesticide | Yangnon Chemical Company |
| Triton XQS-20 | Wetting agent | Dow Chemical |
| Tergito 15-S-9 | Dispersant | Dow Chemical |
| Tergitol L-64 | Dispersant | Dow Chemical |
| Tergitol TMN-10 | Wetting agent | Dow Chemical |
| Dowfax 2A1 | Wetting agent | Dow Chemical |
| SC-3 | Wetting agent | Jiangsu SinvoChem Company |
| SC 2728 | Dispersant | Jiangsu SinvoChem Company |
| Duramax D-305 | Polycarboxylate surfactant | Dow Chemical |
| Lignosulfonate | Sulfonate surfactant | Sigma-Aldrich Chemical Reagent Co. |
| Tersperse 4896 | Wetting agent | Huntsman Company |
| Tersperse 2500 | Dispersant | Huntsman Company |
| Tersperse 2700 | Dispersant | Huntsman Company |
| Xanthan gum | Thickener | International Specialty Products, Inc. |
| Aluminum magnesium silicate | Thickener | Huizhi Chemical Co. |
| Propylene glycol | Anti-freezer | Sinopharm Chemical Reagent Co. |
| DK 1247 | Defoamer | Dow Corning |

### Example 1 (Preparation of Sample 1 in accordance with one embodiment of the present invention).

Mix 1.0 gram of Triton XQS-20 (wetting agent), 1.0 gram of Tergitol 15-S-9 (wetting agent), 3.0 grams of Duramax D-305 (dispersant), 1.0 gram of lignosulfonate (dispersant), 2.0 grams of Xanthan gum (2wt%, thickener), 0.3 grams of aluminum magnesium (thickener), and 35.2 grams of deionized (DI) water in a 250 ml glass beaker at room temperature. Manually mix the above-mentioned chemicals in the 250 ml glass beaker until all the materials are completely dissolved in DI water by visual confirmation.

Next, add 1.0g gram of DK1247 (de-foamer) into the solution and mix well manually until visually confirm that it is completely dissolved.

Next, add 50.5 grams of imidacloprid pesticide (at 95% concentration) into the solution. First, manually mix the pesticide using a glass rod for 15 minutes. Then, immediately thereafter, mix the solution with a high speed homogenizer at 4,000 RPM for 5 minutes to form uniform pesticide slurry.

Thereafter, pour the pesticide slurry into a stainless steel jar of a sand grinding miller that contains grinding beads. Wet grind the pesticide slurry for 60 to 120 minutes to form a pesticide suspension concentrate.

After the wet grinding step, filter the pesticide suspension concentrate with a 100-mesh trap valve to remove the grinding beads and any possible particles.

Finally, add 5.0 grams of propylene glycol (anti-freeze agent) and mix it into the pesticide suspension concentrate using a high speed homogenizer at 4,000 RPM for 15 minutes.

### Example 2

A pesticide suspension concentrate was prepared as described in Example 1 above, except that instead of adding Triton XQS-20 as a wetting agent, Tergitol L-64 was used as a wetting agent. In this particular example, 1.0 gram of Tergitol L-64 was used, which amounts to approximately 1 percent of the final composition by weight.

### Example 3 (comparative example)

A pesticide suspension concentrate was prepared as described in Example 1 above, except that instead of adding Triton XQS-20 and Tergitol 15-S-9 as wetting agents, 2.0 grams of Tergitol TMN-10 was added to the mixture. The amount of Tergitol TMN-10 added constitutes approximately 2 percent of the final composition by weight.

### Example 4 (comparative example)

A pesticide suspension concentrate was prepared as described in Example 1 above, except that instead of adding both Triton XQS-20 and Tergitol 15-S-9 as wetting agents, only one wetting agent, namely, 1.0 gram of Tergitol XQS-20 was added to the mixture. The amount of Tergitol XQS-20 added constitutes approximately 1 percent of the final composition by weight.

### Example 5 (comparative example)

A pesticide suspension concentrate was prepared as described in Example 1 above, except that instead of adding both Triton XQS-20 and Tergitol 15-S-9 as wetting agents, only one wetting agent, namely, 1.0 gram of Tergitol 15-S-9 was added to the mixture. The amount of Tergitol 15-S-9 added constitutes approximately 1 percent of the final composition by weight.

### Example 6 (comparative example)

A pesticide suspension concentrate was prepared as described in Example 1 above, except that neither Triton XQS-20 nor Tergitol 15-S-9 was added as wetting agents. Instead, 1.0 gram of Tergitol L-64, as wetting agent, was added to the mixture. The amount of Tergitol L-64 added constitutes approximately 1 percent of the final composition by weight.

### Example 7 (comparative example)

A pesticide suspension concentrate was prepared as described in Example 1 above, except that no lignosulfonate was added into the mixture.

### Example 8 (comparative example)

A pesticide suspension concentrate was prepared as described in Example 1 above, except that instead of adding Tergitol 15-S-9 as a wetting agent, 1.0 gram of Tergitol L-64 was added to the mixture. The amount of Tergitol L-64 added constitutes approximately 1 percent of the final composition by weight.

### Example 9 (comparative example)

A pesticide suspension concentrate was prepared as described in Example 1 above, except that instead of adding Tergitol 15-S-9 as a wetting agent, 1.0 gram of Tergitol L-64 were added to the mixture. The amount of Tergitol L-64 added constitutes approximately 1 percent of the final composition by weight. Also, unlike in Example 1, no Duramax D-305 (dispersant) was added.

### Example 10 (comparative example)

A pesticide suspension concentrate was prepared as described in Example 1 above, except that no wetting agents such as Triton XQS-20 or Tergitol 15-5-9 were added. However, 2.0 grams of Dowfax 2A1 was added into the mixture. The amount of Dowfax 2A1 added into the mixture constitutes approximately 2 percent of the final composition by weight.

### Example 11 (comparative example)

A pesticide suspension concentrate was prepared as described in Example 1 above, except that no wetting agents such as Triton XQS-20 or Tergitol 15-5-9 were added. Also, no dispersant lignosulfonate was added. However, 2.0 grams of Tersperse 4896, 3.0 grams of Tersperse 2500, and 1.0 gram of Tersperse 2700 were added into the mixture. Tersperse 4896, Tersperse 2500, and Tersperse 2700 are all products of Huntsman. The amounts of Tersperse 4896, 2500, and 2700 being added into the mixture constitute approximately 2 percent, 3 percent, and 1 percent of the final composition by weight, respectively. Example 11 was prepared to model after the commercially available pesticidal suspension concentrate.

### Example 12 (comparative example)

A pesticide suspension concentrate was prepared as described in Example 1 above, except that no wetting agents such as Triton XQS-20 or Tergitol 15-5-9 were added. Also, no dispersant lignosulfonate was added. However, 2.0 grams of SC-3 (wetting agent) was added into the mixture. Also, the amount of Duramax D-305 had been reduced to 1.0 gram, which now only constitutes approximately 1 percent of the final composition by weight. Example 12 was prepared to model after the commercially available pesticidal suspension concentrate.

Table 2 below summarizes the various raw materials that were uses in the all the samples and the corresponding weight percent in terms of the total weight of the final composition. There are a total of 12 samples, which include the two samples prepared in accordance to the present invention (S1 and S2), and the 9 comparative samples (S3 to S12).

**Table 2 - List of Raw Materials Used in Various Samples and Weight Percent**

| **Chemicals** | **Samples** | | | | | | | | | | | |
|---|---|---|---|---|---|---|---|---|---|---|---|---|
| | **S1** | **S2** | **S3** | **S4** | **S5** | **S6** | **S7** | **S8** | **S9** | **S10** | **S11** | **S12** |
| Imidacloprid Pesticide (95%) | 48 | 48 | 48 | 48 | 48 | 48 | 48 | 48 | 48 | 48 | 48 | 48 |
| Triton XQS-20 | 1 | 1 | | 1 | | | 1 | 1 | 1 | | | |
| Tergitol 15-S-9 | 1 | | | | 1 | | 1 | | | | | |
| Tergitol TMN-10 | | | 2 | | | | | | | | | |
| Tergitol L-64 | | 1 | | | | 1 | | 1 | 1 | | | |
| Tersperse 4896 | | | | | | | | | | | 2 | |
| Dowfax 2A1 | | | | | | | | | | 2 | | |
| SC-3 | | | | | | | | | | | | 2 |
| Tersperse 2500 | | | | | | | | | | | 3 | |
| Tersperse 2700 | | | | | | | | | | | 1 | |
| Duramax D-305 | 3 | 3 | 3 | 3 | 3 | 3 | 3 | 3 | | 3 | | 1 |
| Lignosulfonate | 1 | 1 | 1 | 1 | 1 | 1 | | | 1 | | | |
| SC-2728 | | | | | | | | | | | | 2 |
| Xanthan gum (2wt%) | 2 | 2 | 2 | 2 | 2 | 2 | 2 | 2 | 2 | 2 | 2 | 2 |
| Aluminum magnesium silicate | 0.3 | 0.3 | 0.3 | 0.3 | 0.3 | 0.3 | 0.3 | 0.3 | 0.3 | 0.3 | 0.3 | 0.3 |
| Propylene glycol | 5 | 5 | 5 | 5 | 5 | 5 | 5 | 5 | 5 | 5 | 5 | 5 |
| DK 1247 | 1 | 1 | 1 | 1 | 1 | 1 | 1 | 1 | 1 | 1 | 1 | 1 |
| DI Water | Up to 100 | Up to 100 | Up to 100 | Up to 100 | Up to 100 | Up to 100 | Up to 100 | Up to 100 | Up to 100 | Up to 100 | Up to 100 | Up to 100 |

### TEST PROCEDURE

The following test procedures were used to generate the data reported in the Results section below. Specifically, the thermal stabilities of the samples were observed at 10 minutes, 48 hours, and 2 weeks after the samples have been stored at 54 degree Celsius. Specifically, the flowability of the samples was evaluated to see whether undesirable phenomenon such as pasting, caking, settling, creaming, or chalking had occurred.

### RESULTS

Table 3 below summarizes the thermal stability evaluation results of the various samples.

**Table 3 - Evaluation Results of Thermal Stability**

| **Example** | **Flow ability after 10min thermal storage** | **Flow ability after 2days thermal storage** | **Flow ability after 2weeks thermal storage** |
|---|---|---|---|
| S1 | Good | Good | Good |
| S2 | Good | Good | Good |
| S3 | Pasting | - | - |
| S4 | Good | Pasting | - |
| S5 | Pasting | - | - |
| S6 | Pasting | - | - |
| S7 | Good | Good | Pasting |
| S8 | Good | Good | Pasting |
| S9 | Pasting | - | - |
| S10 | Good | Pasting | Pasting |
| S11 | Good | Good | Pasting |
| S12 | Good | Pasting | Pasting |

As Table 3 shows, both Samples 1 and 2 demonstrate sustained excellent suspension stability after prolonged thermal storage. Sample 1 contains an additive package that comprises a combination of (1) a wetting agent made from a combination of polyoxyethylene ether and an ethylene oxide/propylene oxide copolymer, (2) a first dispersant comprising a polycarboxylate, and (3) a second dispersant comprising a lignosulfonate. Sample 2 contains an additive package that comprises a combination of (1) a wetting agent made from a combination of polyoxyethylene ether and a SAE surfactant, (2) a first dispersant comprising a polycarboxylate, and (3) a second dispersant comprising a lignosulfonate.

In comparison, Sample 3 was made using essentially the same starting materials, except removing the wetting agents used in Samples 1 and 2, and replacing them with another common wetting agent Tergitol TMN-10. Sample 3 shows almost immediate poor thermal stability and pasting (i.e., solid formation) was observed within 10 minutes of being placed in 54 degree Celsius environment.

With respect to Sample 4, only polyoxyethylene ether, not a combination of polyoxyethylene ether and an ethylene oxide-propylene oxide copolymer, was added as a wetting agent. Therefore, while Sample 4 initially showed good thermal stability, its thermal stability began to deteriorate after two days.

With respect to Sample 5 and 6, no polyoxyethylene ether was added as wetting agent (although some ethylene oxide-propylene oxide copolymer, or some SAE surfactant was added as wetting agent). Due to the lack of polyoxyethylene ether as wetting agent, Samples 5 and 6 show immediate pasting.

With respect to Samples 7 and 8, no second dispersant lignosulfonate was added. As a result, Samples 7 and 8 show initial good thermal stability for two days; but the thermal stability deteriorates after that and pasting had started to occur at around two weeks.

With respect to Sample 9, no first dispersant polycarboxylate was added. As a result, Sample 9 shows immediate pasting after it has been stored at the temperature of 54 degree Celsius.

With respect to Sample 10, the additive package composition comprises a polycarboxylate and a sulfonate surfactant. No wetting agent was included in the additive package composition. As a result, Sample 10 shows pasting after being stored at 54 degree Celsius when it was evaluated after two days.

With respect to Samples 11 and 12, the wetting agents in accordance to the embodiments of the present invention were not used and no second dispersant lignosulfonate was used. As a result, Samples 11 and 12 show poor thermal stability after prolonged storage at 54 degree Celsius.

## Claims

1. An additive package composition comprising : (1) a wetting agent, wherein the wetting agent comprises a combination of a polyoxyethylene ether and an ethylene oxide-propylene oxide copolymer; (2) a polycarboxylate type surfactant, wherein the polycarboxylate type surfactant is a hydrophobic modified comb-like polymer; and (3) a sulfonate type surfactant, wherein the sulfonate type surfactant is lignosulfonate, wherein the polycarboxylate type surfactant is from 0.1 to 20 weight percent based on a total dry weight of the additive package and a weight ratio of the polycarboxylate type surfactant to the sulfonate type surfactant is from 1:0.01 to 1:40.

2. An additive package composition according to claim 1, wherein the combination of a polyoxyethylene ether and an ethylene oxide-propylene oxide copolymer contains substantially equal amounts of the polyoxyethylene ether and the ethylene oxide-propylene oxide copolymer.

3. An additive package composition according to claim 1, wherein the ethylene oxide-propylene oxide copolymer contains 50 weight percent to 85 weight percent of polymerized ethylene oxide units, with the remainder being polymerized propylene oxide units.

4. A pesticidal suspension concentration comprising an additive package composition according to claim 1 and an agricultural chemical compound.

5. A pesticidal suspension concentration according to claim 4, wherein the agricultural chemical compound is imidacloprid.

## Patentansprüche

1. Eine Additivpaketzusammensetzung, die Folgendes beinhaltet: (1) ein Benetzungsmittel, wobei das Benetzungsmittel eine Kombination aus einem Polyoxyethylenether und einem Ethylenoxid-Propylenoxid-Copolymer beinhaltet; (2) ein Tensid vom Polycarboxylattyp, wobei das Tensid vom Polycarboxylattyp ein hydrophob modifiziertes kammartiges Polymer ist; und (3) ein Tensid vom Sulfonattyp, wobei das Tensid vom Sulfonattyp Lignosulfonat ist, wobei das Tensid vom Polycarboxylattyp bezogen auf ein Gesamttrockengewicht des Additivpakets 0,1 bis 20 Gewichtsprozent beträgt und ein Gewichtsverhältnis des Tensids vom Polycarboxylattyp zu dem Tensid vom Sulfonattyp 1 : 0,01 bis 1 : 40 beträgt.

2. Additivpaketzusammensetzung gemäß Anspruch 1, wobei die Kombination aus einem Polyoxyethylenether und einem Ethylenoxid-Propylenoxid-Copolymer im Wesentlichen gleiche Mengen des Polyoxyethylenethers und des Ethylenoxid-Propylenoxid-Copolymers enthält.

3. Additivpaketzusammensetzung gemäß Anspruch 1, wobei das Ethylenoxid-Propylenoxid-Copolymer zu 50 Gewichtsprozent bis zu 85 Gewichtsprozent polymerisierte Ethylenoxideinheiten enthält, wobei der Rest polymerisierte Propylenoxideinheiten sind.

4. Ein pestizides Suspensionskonzentrat, das eine Additivpaketzusammensetzung gemäß Anspruch 1 und eine landwirtschaftliche chemische Verbindung beinhaltet.

5. Pestizides Suspensionskonzentrat gemäß Anspruch 4, wobei die landwirtschaftliche chemische Verbindung Imidacloprid ist.

## Revendications

1. Une composition d'ensemble d'additifs comprenant : (1) un agent mouillant, l'agent mouillant comprenant une combinaison d'un éther de polyoxyéthylène et d'un copolymère oxyde d'éthylène-oxyde de propylène ; (2) un tensioactif de type polycarboxylate, le tensioactif de type polycarboxylate étant un polymère en peigne modifié hydrophobe ; et (3) un tensioactif de type sulfonate, le tensioactif de type sulfonate étant du lignosulfonate, le tensioactif de type polycarboxylate allant de 0,1 à 20 pour cent en poids rapporté à un poids sec total de l'ensemble d'additifs et un rapport en poids du tensioactif de type polycarboxylate au tensioactif de type sulfonate va de 1/0,01 à 1/40.

2. Une composition d'ensemble d'additifs selon la revendication 1, dans laquelle la combinaison d'un éther de polyoxyéthylène et d'un copolymère oxyde d'éthylène-oxyde de propylène contient des quantités substantiellement égales de l'éther de polyoxyéthylène et du copolymère oxyde d'éthylène-oxyde de propylène.

3. Une composition d'ensemble d'additifs selon la revendication 1, dans laquelle le copolymère oxyde d'éthylène-oxyde de propylène contient de 50 pour cent en poids à 85 pour cent en poids d'unités d'oxyde d'éthylène polymérisées, le reste étant des unités d'oxyde de propylène polymérisées.

4. Une concentration de suspension pesticide comprenant une composition d'ensemble d'additifs selon la revendication 1 et un composé chimique agricole.

5. Une concentration de suspension pesticide selon la revendication 4, dans laquelle le composé chimique agricole est l'imidaclopride.
